# EUROPEAN PATENT APPLICATION

(11) **EP 1 426 857 A1**
(43) Date of publication of application: **09.06.2004**
(21) Application number: 02024665.8
(22) Date of filing: 05.11.2002
(51) Int. Cl.: G06F 9/44

(54) **Component-based development of software**

(71) Applicant: Orimos S.A., 1820 Montreux (CH)
(72) Inventor: Wolf, Dietrich, Richmond, Surrey, TW10 7LW (GB)
(74) Representative: Sunderland, James Harry

(57) **Abstract**

The present invention provides an application framework under which product applications are configured and manipulated, comprising:-
(a) application objects providing respective basic information processing functions for use in a product application , each application object containing its processing function within a standard interface with the inputs and output(s) of which the processing function communicates without regard to the connections of those inputs and output(s),
(b) an architectural structure in which:-
   application objects are organised into a hierarchy , the application objects being in parent/child relationship one to another in the hierarchy, and the hierarchy comprising an assembly of application objects capable of providing for a product application an application function built from the basic information processing functions of the objects, and
   data dependencies between application objects are established means of connections between standard interface inputs and output(s) of application objects,
whereby the hierarchy can be modified at run-time, and data dependency connections can be set up and/or deleted at run-time.

## Description

### TECHNICAL FIELD

The present invention relates to information processing applications and in particular to the development and modification of such applications.

### BACKGROUND

There is a need for powerful information processing applications in many fields of technology and areas of economic endeavour. These applications are often of a very specialised nature, in the sense that they are intended to control, manage or manipulate specific kinds of real-world information or inputs, possibly provided in real time. Examples of such applications are, for instance, applications for automatic control and management of integrated production facilities, applications for control and management of transportation networks such as those of fleet vehicle operators, and applications used in financial markets for example for pricing financial instruments such as derivatives etc..

There is also a need to develop such information processing applications as rapidly as possible, in a way which meets the specialised needs of the intended use, e.g. fleet management etc., and specific requirements of the user of the system.

Efforts have been made to meet this need for rapid development through the use of object oriented programming techniques and object oriented development tools. Such development tools, for example RAD tools, can offer some improvement to coding, testing and rollout times, but offer only partial solutions to the problem of rapid and secure development of powerful and complex applications.

There is further the need to provide for adaptation of developed information processing applications to meet changing circumstances or market needs, and/or to deal with changing user requirements. Conventionally, objects that represent different problems have different data content and data processing methods. This means that adapting or enhancing an existing information-processing environment to accommodate new requirements necessitates a large amount of effort, inter alia involving adaptation of the data model for storing the data and structures for data transmission need to the required changes.

Further, achieving optimum performance using standard object-oriented approaches and languages has required compilation into fixed executables or libraries which, once deployed, are inflexible and difficult to extend. Thus, modification or extension of applications to meet changed user needs has been the domain of the skilled programmer, who can write and modify the code on which the application is built. This inevitably involves delay for the users of the applications, who have to wait until in-house or third party IT specialists have completed the required update. There is thus also a need to provide that users, i.e. people who are not programmers and have no coding skills, with scope for modifying or extending applications.

### SUMMARY OF THE INVENTION

The present invention provides an application framework within which an application can be efficiently and rapidly developed, and which allows for rapid and efficient modification or enhancement of the developed application to meet changing requirements or circumstances.

The present invention further provides an application framework which allows applications to be modified or enhanced at runtime, and for this to be accomplished by users with no coding skills.

Applications using the framework of the present invention can offer a combination of the speed and reliability of natively compiled code with a degree of flexibility and extensibility previously not available with compiled code systems.

Further, applications using the framework of the present invention are such that components making up the application can be run on different processes on one machine and/or on different machines in a network, so that the applications are processed in a distributed manner enabling better use to be made of available resources.

### ADVANTAGES OF THE INVENTION

In prior application development environments changing the behaviour of objects/components created via standard object-oriented development tools, or modifying the data flow through these objects/components requires, in substance, iterations through the initial creation process, which is a task that becomes particularly time-consuming and complicated at advanced stages of the development process. In contrast, within the application framework of the present invention applications can be developed without the need to permanently repeat this process. Further, prior application development environments rely on programming expertise for the creation and modification of an application, the framework of the present invention can be used by those with programming skills and by those having no or very limited programming skills.

As a result, the application framework provided by the present invention effectively redefines the way applications are designed, implemented, tested and extended, and can greatly reduce time-to-development and costs involved. Applications developed within the framework of the present invention also offer accessibility and flexibility to users such that they can effect modifications, without having the ability of write code, to rapidly adapt the application to their needs without having to wait for IT specialists to do this for them.

Further, applications developed within the framework of the present invention are so structured that they are capable of distributed processing across different machines available on a network.

### BRIEF DESCRIPTION OF THE DRAWINGS

- Figure 1: a schematic diagram of an application object as employed in the framework of the present invention (illustrating the standard application object interface)
- Figure 2: a schematic diagram of a hierarchy as employed in the framework of the present invention
- Figure 3: a schematic diagram of data dependencies as employed in the framework of the present invention
- Figure 4: a schematic diagram illustrating distributed processing of an application as provided by the present invention

### DESCRIPTION

Within the application framework provided by the present invention, an application is constructed from building blocks which are arranged within an architectural structure which combines the building blocks to deliver the required application functionality.

### The Building Blocks: Application Objects (AOs)

AOs are the basic building blocks or atomic elements used by the present invention to construct and application. AOs may be complied objects which provide the speed and stability of natively complied code. Each AO takes a number of inputs and applies some processing to these inputs in order to derive, typically, a single output value. An AO's processing can be a very simple operation like adding two input values together or it can be very complex with information coming from many inputs. AOs may be provided as instances of "standard" AO's which provide commonly needed or generic processings, made available in a library, or may be specially written by software developers where special processing capabilities are needed.

At run-time the AO code that performs the processing can obtained from a library of compiled code which is then loaded.

Although the processing effected by different AOs may differ greatly in terms of complexity, and although the processing may be based on natively compiled code, in the application framework provided by the present invention each AO is "wrapped" in a interface having a standard structure. This means that data input and output is performed in a uniform manner, which makes it easy for AOs to communicate with one another, or with external data sources or sinks. That is, for all AOs a uniform interface structure is used which provides consistent representations of meaning or significance of the AOs inputs and output(s), and these are accessible via the framework provided by the present invention. In other words, although a user cannot "see" or manipulate what actually effects the processing provided by the AO (e.g. compiled code), through the framework provided by the present invention the user (or developer) can access and interact with the interface, taking account of the significance and type of the inputs/outputs at the interface. Under the framework provided by the present invention, the user can interact with the inputs/outputs of AOs, to connect or disconnect them to outputs/inputs of, for example, other AOs.

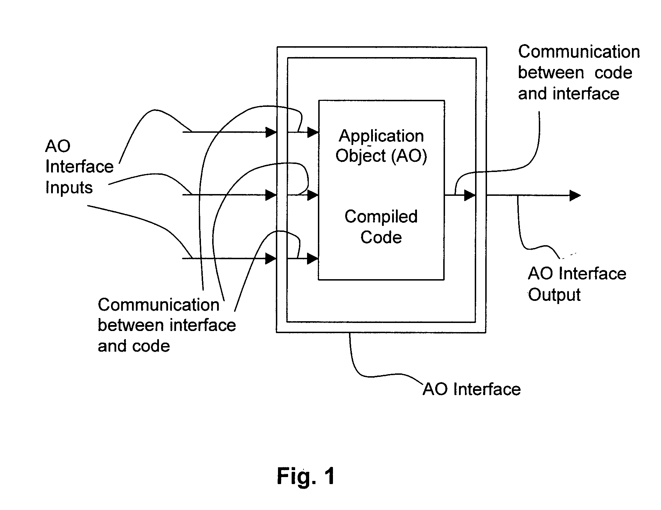

Figure 1 provides a schematic illustration of a compiled code AO with its code wrapped in the standard AO interface. From the Figure it will be understood that the AO code communicates with the interface, and that the "outside world" communicates with the interface, via the interface inputs and outputs. The interface structure is standardised, e.g. applies the consistent designations to the inputs and outputs of the interface which can be accessed by a user or developer. For example, the interface structure provides the user or developer with designations of the number of inputs required for the AO concerned, whether each input is mandatory (i.e. data must be presented to the input for the AO to function) or optional, and the type of data to be presented (e.g. string, numeric, boolean etc.) and also provides for the user or developer a description of the meaning of the data to be presented (e.g. first number to be added, second number to be added). This applies similarly to the output(s) of the interface (e.g. sum of first and second numbers).

Thus, within the application framework of the present invention AOs have interfaces for uniform handling of data flow. This simple but powerful paradigm can be alternatively summarized as: "an object receives inputs and produces an output without having to concern itself with where the inputs come from or where the output goes; In effect, the AO (e.g. code) is decoupled from its data providers and consumers. In other words the code only "sees" the interface and is not concerned with what is beyond that interface. This is a major distinction between the framework of the present invention and other object oriented application development tools. That is why, with the framework of the present invention, objects can inserted and updated (see below), and data flow between components (e.g. AOs) can be modified without additional coding, linking or compilation.

Further, when the AO is called upon to process data, the interface performs validity checks to ensure that the presented data complies with the criteria (e.g. mandatory/optional; string/numeric/boolean) set for each input. Thus the AO, contained within the interface, need not concern itself with data validation.

In preferred embodiments of the present invention, the application framework provides a visual user or developer interface which displays to the user a representation of each AO together with a representation of the inputs and output(s) of the AO such that the user can understand the function performed by the AO (as a very simple example: add two numbers together) and the types (mandatory/optional; string/numeric/boolean) and connections of the inputs and output(s) of the AO, The visual user interface provides that the user can create or delete connections by simple drag-and-drop or point-and-click techniques.

### The Architectural Structure

The architectural structure imposed by the application framework of the present invention comprises a hierarchy and data dependencies, as explained below.

### The Hierarchy

A number of AOs are combined into a hierarchy. In the hierarchy, AOs are primarily arranged or organised in parent/child relationships. Every AO in a hierarchy (with the exception of the "root" AO) has a parent. A hierarchy can be thought of as representing a function to be performed or a problem to be solved by the application, with the individual AOs in the hierarchy providing the individual tools or functionality which can be assembled or combined together to perform the function or solve the problem. In other words, a hierarchy represents a real-world object (an object that performs a function relevant to the real world situation which the application is to deal with, e.g. an object providing the function of a financial instrument, such as a bond pricing or hedge calculation instrument, or an organisational instrument, such as an optimal vehicle routing calculator), with the individual AOs of the hierarchy providing the component capabilities needed to create the real-world object.

The hierarchy may have a tree structure, "sub" hierarchies nested as needed. The application developer or user can see the whole of the tree structure, down to individual leaf elements, i.e. AOs.

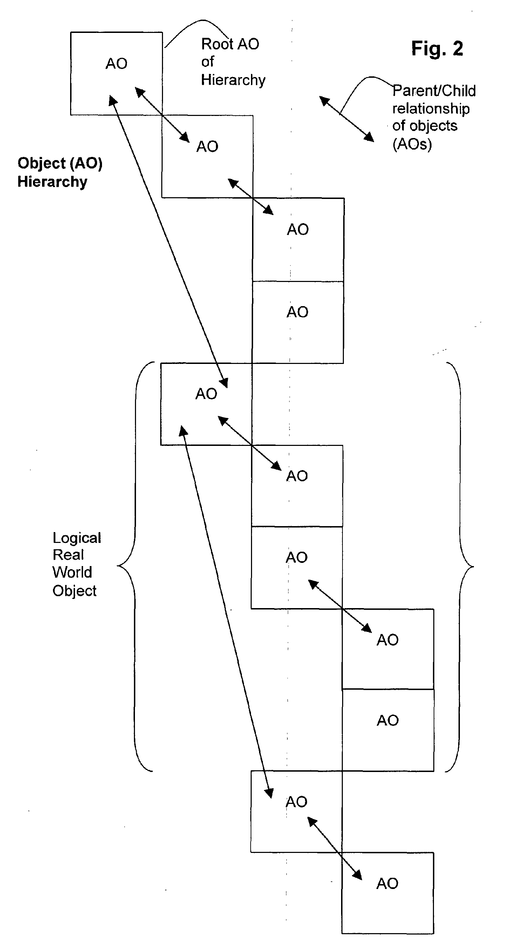

Figure 2 gives a very simple illustration of the hierarchy/sub-hierarchy organisation of AOs in accordance with the present invention. The complete hierarchy, starting from the root AO, corresponds to a logical real world object, that is a function which the user or developer relates to the real world capability required of the application which the hierarchy represents , built up of individual AOs which provide the individual processing capabilities or atomic elements needed to perform the real world function. As illustrated in Figure 2, individual sub-hierarchies may themselves also correspond to logical real world objects (i.e. real world capabilities required of the application of which the sub-hierarchy is a part). This organisation of AOs into hierarchies and sub-hierarchies, largely corresponding to logical real world objects, greatly facilitates the work of the developer and enables a user more readily to understand the structure of the application.

In substance, the hierarchy provides all the real-world objects which the application concerned needs to fulfil its purpose.

Under the application framework of the present invention, the hierarchy can be seen and manipulated. AOs can be additionally introduced or removed , or sub-hierarchies can be newly created or deleted. Thus it is possible for the developer or user to modify the hierarchy to meet changed circumstances. As a simple example, an optimal vehicle route calculator may involve a hierarchy of AOs which deal with various relevant factors, such as cost of fuel. If a new cost factor arises, for example because of a new government road pricing scheme, the hierarchy can be modified by the introduction of an AO to deal with this factor in the optimal route calculation. This can be accomplished at run-time.

In preferred embodiments of the present invention, the a visual user or developer interface of the application framework displays to the user a representations of the hierarchy such that the user can understand the hierarchy and any sub-hierarchies in terms of their functions, or the real world objects they represent (e.g. optimal route calculator) and the parent/child relationships of the AOs in the hierarchy , The visual user interface provides that the user can manipulate the hierarchy by simple drag-and-drop or point-and-click techniques.

### Data Dependencies

A hierarchy, or AOs in a hierarchy, need to receive appropriate data to perform their functions from appropriate data sources of data and, in turn, to deliver output data to appropriate data destinations. For example, an AO may provide its output value as an input to one or more other AOs . These AOs to which an output value is input are said to be dependants of the AO providing the output value. The network which describes the flow of information between AOs is called the dependency graph.

It will be understood that data dependencies, and thus the dependency graph network is essentially unrelated to the hierarchy to which the AOs belong. To understand the distinction between the hierarchy and dependencies. It might be helpful to think of:
- The hierarchy as a top to bottom structure representing the organisation of AOs (and sub-hierarchies). This structure may be thought of a primarily static (though changeable and extensible) part, with each hierarchy consisting of particular atomic elements (AOs) which map the structure of the problem to be solved, or of component problems to be solved in achieving a solution of the real-world problem addressed.
- Data dependencies as a left to right structure representing the structure of information flow through the dependency graph. This structure may be thought of as providing the connections between the atomic elements (AOs), which guarantee the data flow when input information updates in the application at run time.

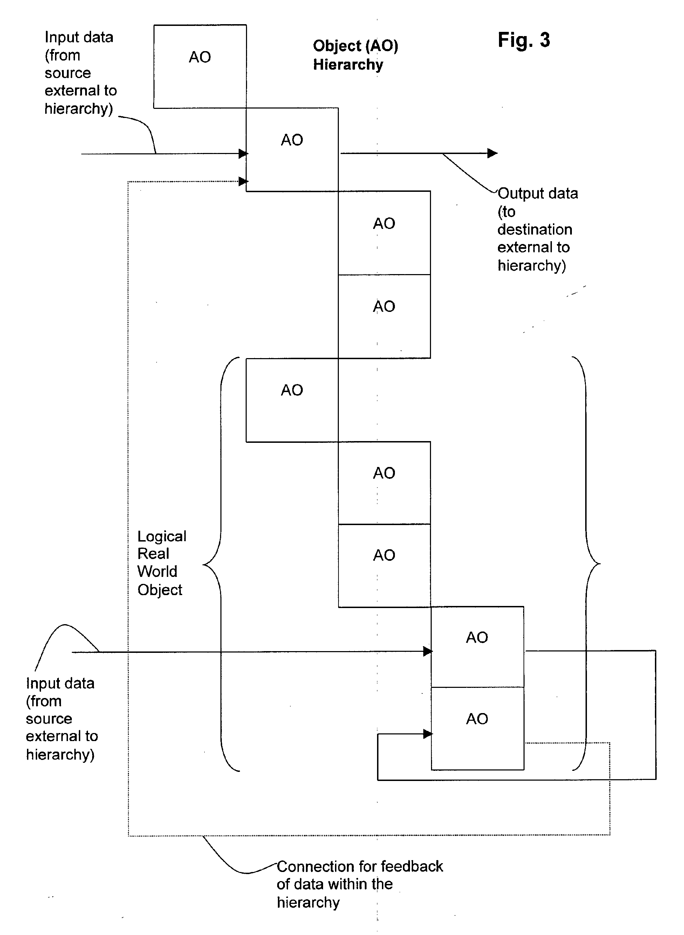

Figure 3 provides a very simple schematic illustration of data dependencies of AOs in accordance with the present invention. Connections shown by solid lines which indicate data flow are established from external data sources to the inputs appropriate AOs (i.e. to the interface inputs of the AOs, and such data flow connections are established between outputs of the AOs and inputs of other AOs within the hierarchy or inputs of external destinations of data. Feedback connections, illustrated by a dotted line, can also be established between an output and an input of the hierarchy to enable data to be updated for a subsequent iteration of the processing carried out by the hierarchy.

Because of the standard interface structure provided by the present invention these data dependencies, or data flow connections, can be readily devised and established by a developer or user, and the developer or user can readily changes them to meet changing needs of the application. For example, the developer or user can alter the connections or data flow to accommodate a new AO in an optimal route calculation hierarchy to take account a new government road pricing scheme as mentioned above. Because of the standard interface structure, the developer or user can readily ensure that appropriate connections (e.g. with regard to input/output types and designations) are correctly made.

In preferred embodiments of the present invention, the visual user or developer interface of the application framework displays to the user a representations of the data dependencies such that the user can understand the data flows involved. The visual user interface provides that the user can manipulate the paths of data flow by simple drag-and-drop or point-and-click techniques.

It is the architectural simplicity of the application framework of the present invention that gives it its strength and flexibility. Each AO receives inputs and produces an output without having to concern itself with where the inputs come from or where the output goes. As mentioned above, this decoupling of an AO from its data providers and consumers strongly distinguishes the development environment of the present invention from other object-oriented development tools. In this environment, component behaviour and data flow between components can be modified without additional coding, linking or compilation.

Overall, the application framework provided by the present invention enables non-programmers with little technical expertise to solve problems by very simply linking together AOs without having to give any consideration to coding, linking or other technical issues. AOs may provide connectivity to built-in services like data sources through to others that provide calculation capabilities and visualisation of information. The connectivity between objects is easily achieved through a uniform interface that provides a consistent representation of the meanings of an object's inputs and its output. This unique quality of AO's allows the non-programmer to create the required functionality by visually connecting AOs together like Lego blocks.

The framework provided by the present invention enables complex systems to be broken down into logical elements which can be developed and tested as discrete components by specialist developers, third party vendors etc. The framework then allows even non-programmers to design, deploy and monitor high performance solutions based on those components by managing the connection complexity between them without having to perform any further coding or linking.

### Distributed Processing

Furthermore, the present invention enables applications to be constructed which run in a distributed manner.

In an embodiment of the present invention, parts of the AO hierarchy, e.g. a sub-hierarchy, of the application can be assigned to its own "container". This container provides the thread that executes the code of the AOs within it and also provides an messaging interface for external data sources and destinations to enable them to interact with - provide data to and accept data from - the AOs in the container. Externally input data for AOs in the container are channelled as an input message queue that belongs to the container thread. The AOs in the container can thus take inputs from the container input message queue as well as from other AOs within the container. Data from AOs in the container can also be fed back to the container input queue (see e.g. Figure 3). Each container thus encapsulates a single processing queue.

The threads used by different containers can be executed on different machines or processes, or a machine or process can handle a number of threads or containers, to make full use of multi-processor capabilities of the machine. This enables the application to be processed in a distributed manner, with the code of different containers (or different parts of the hierarchy of AOs being run in distributed processes. Hierarchy relationships (e.g. parent/child relationships) and data dependencies are still maintained.

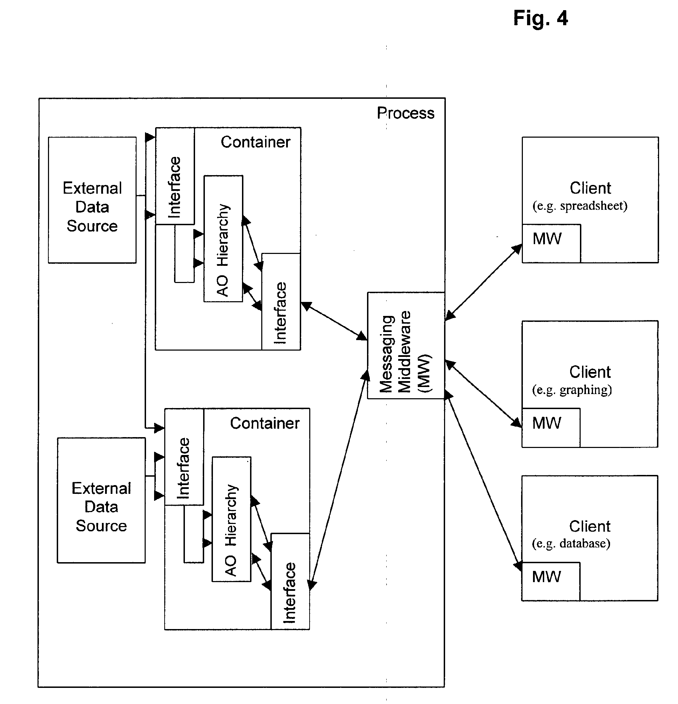

Figure 4 provides a very simple schematic illustration of distributed processing of an application provided in accordance with the present invention. In Figure 4 a process (e.g. a machine) is running two containers containing respective parts of the overall hierarchy External data sources communicate with AOs of the part hierarchies via input messaging queues (interfaces) of the containers. Similarly AOs of the part hierarchies output data via interfaces. In the illustration of Figure 4, by way of example, messaging middleware is shown as handling communications between clients of the application provided by the present invention, such clients being for example a spreadsheet client which can take data provided by the present invention into a spreadsheet representation, a graphing client and a database client. Through the messaging middleware the clients can send data and/or requests for data to the interfaces of the containers and thus to the AOs of the part hierarchies contained or run in the containers, and also receive data.

In terms of containers, the application developer can chose different organisations as best suited to the particular application concerned. For example, the use of many containers can provide for highly parallel processing, but it should be noted that this could be time consuming if many cross-container data connections are involved, because data has to be passed between different threads.

Even if parts of the hierarchy are assigned to a different container or containers the framework of the present invention provides the application developer or user with a logical view of the structure of the application (i.e. AOs, the hierarchy and data dependencies) and the developer or user can manipulate or modify the structure based on that logical view.

In summary, under the application framework provided by the present invention, AOs, for example compiled objects, can be connected together dynamically, to deliver both performance and flexibility. This provides powerful features such as enabling the application users to add their own new system components at runtime. Whereas a conventional object-oriented design consists of objects that have their structure and relationships fixed at compile time, the framework of the present invention provides for objects or components that have uniform transparent interfaces providing normalised data flow, such that the structure in which the objects are positioned and the relationships between objects can be modified at runtime. Further, the framework provided by the present invention is designed to enable the decomposition of complex objects into simple components. Structures are created by combining simple components to build flexible real world objects, which can be extended at runtime. This enables applications to evolve to address new requirements while ensuring maximum system availability. Moreover, application objects used by applications in accordance with the invention can be processed in a distributed manner across different machines or processes whilst the necessary relationships and data flows between objects are maintained.

Thus the present invention provides:-
1. A framework within which an application is built/developed by combining processing elements (primarily compiled code objects) in a structured way.
2. A framework within which the elements making up the application can be manipulated at runtime.
3. A framework within which the elements of the application can be run in a distributed manner, e.g. on different machines.

The framework of the present invention provides that:-
(a) each processing element or object, regardless of the processing which it effects (i.e. the task it performs), is constrained to comply with a defined interface structure.
   In effect, each element or object - regardless of the task it performs - is encapsulated within a standard interface which controls data input to the element or object and controls data output from the object.
   The standard interface structure allows a developer simply to declare, for example, the number of inputs required by an element or object, the required type of each input (e.g. string, integer, number, boolean), to indicate the significance (i.e. describe the meaning) of the data to be delivered to each input (e.g. time, distance, interest rate etc.), and to indicate whether each input is compulsory or optional (i.e. whether the data to be delivered to that input is essential for the object to perform its task, or is merely optional). The same applies to the output(s) of the element or object.
   This makes it easier for developers to write the code needed to perform the task required of a particular element or object. The developer need not look beyond the interface. The developer can assume that the interface will deliver correct data at the inputs, and pass data to the output(s) of the object. The interface will check its inputs to ensure that they are providing the required, valid data types for the element or object concerned.
   This also means that objects are reuseable. Some objects will perform very specific and specialised tasks which may be relevant only to a particular application, but other objects may perform tasks which are common to many applications (e.g. mathematical or logical functions, string manipulation functions).
   This reuseability of objects is facilitated by the framework in that the framework makes available a library of pre-defined objects which can be used (copied) for each new application.
(b) A real-world application built using the framework will be required to perform real-world functions, which may be very complex. Within the framework, these real-world functions are based on by assemblies of the elements or objects needed to perform the functions concerned.
   The means for performing each real-world function (or the means of solving a real-world problem) is organised as a hierarchy of the component elements or objects needed (or which might be needed) for performing that function. Sub-hierarchies of objects can be included within a hierarchy.
   The developer can thus break down each real-world function into a collection of component elements or objects (or already defined sub-hierarchies) together needed to perform that function, and can then assemble the elements, sub-hierarchies etc. into a hierarchy. In effect, the developer assembles together the tools needed to accomplish the desired function. Because of the standard interface of the elements or objects, as discussed above, the developer need not concern himself with issues of compatibility between objects - this is ensured by the interface: he need only collect the objects together which are to cooperate in providing the real-world function needed.
(c) To provide a real-world function, the component objects need to be connected together, i.e. data flow paths need to be established between component objects (and from/to external inputs/outputs).
   Because of the standard interface of elements or objects, as discussed above, the developer can readily identify the required data flow paths and establish them to build a real-world function.
   In effect, the developer can assemble and combine the tools needed to accomplish a desired function in a simple manner. Moreover, the framework provides a visualisation of the structure of the application
   Each object can be visualised in terms of its inputs, outputs and functionality. The hierarchy can be visualised in a logical view from the top down to its basic elements, and the data flow connections between objects of the hierarchy can be visualised.
   Further, through this visualisation, the application can be manipulated. Objects can be added to the hierarchy from the library, hierarchies can be modified or restructured, and data flows can be manipulated.
   The visualisation of an application is available not only to the developer of the application, but also to a user of the application at runtime, so that the application can be manipulated not only by the developer but also the user at runtime.
(d) The execution of different parts of the hierarchy (for example a sub-hierarchy, or even an object) can be assigned to respective different containers, i.e. respective different processing threads. This means, for example, that different functions (e.g. real-world functions) can be executed independently of other parts of the hierarchy. The application as a whole can be distributed across a network to best exploit processing power available.

## Claims

1. An application framework under which product applications are configured and manipulated, comprising:-
(a) application objects providing respective basic information processing functions for use in a product application , each application object containing its processing function within a standard interface with the inputs and output(s) of which the processing function communicates without regard to the connections of those inputs and output(s),
(b) an architectural structure in which:-
application objects are organised into a hierarchy, the application objects being in parent/child relationship one to another in the hierarchy, and the hierarchy comprising an assembly of application objects capable of providing for a product application an application function built from the basic information processing functions of the objects, and
data dependencies between application objects are established by means of connections between standard interface inputs and output(s) of application objects,
whereby the hierarchy can be modified at run-time, and data dependency connections can be set up and/or deleted at run-time.

2. An application framework as claimed in claim 1, wherein different parts of the hierarchy are contained or run in respective different containers which each provide a single processing thread for the application objects of the part-hierarchy concerned and provide a single input messaging thread for communication with those objects, whereby the containers can be run in a distributed manner on respective different machines or processes.

3. A method of configuring and manipulation information processing applications, comprising:-
(a) creating application objects providing respective basic information processing functions for use in an information processing application , each application object containing its processing function within a standard interface with the inputs and output(s) of which the processing function communicates without regard to the connections of those inputs and output(s),
(b) creating an architectural structure in which:-
application objects are organised into a hierarchy, the application objects being in a logical parent/child relationship one to another in the hierarchy, and the hierarchy comprising an assembly of application objects capable of providing for the information processing application an application function built from the basic information processing functions of the objects, and
data dependencies between application objects are established by means of connections between standard interface inputs and output(s) of application objects,
whereby the hierarchy can be modified at run-time, and data dependency connections can be set up and/or deleted at run-time.

4. A computer program providing an application framework under which product applications are configured and manipulated, the computer program being operable to assemble into an architectural structure application objects providing respective basic information processing functions for use in a product application, each application object containing its processing function within a standard interface with the inputs and output(s) of which the processing function communicates without regard to the connections of those inputs and output(s),
the architectural structure being such that:-
application objects are organised into a hierarchy, the application objects being in parent/child relationship one to another in the hierarchy, and the hierarchy comprising an assembly of application objects capable of providing for a product application an application function built from the basic information processing functions of the objects, and
data dependencies between application objects are established by means of connections between standard interface inputs and output(s) of application objects,
whereby the hierarchy can be modified at run-time, and data dependency connections can be set up and/or deleted at run-time.

5. A computer program as claimed in claim 4, further comprising a library of application objects available for implementation in the hierarchy.

6. A computer program as claimed in claim 4 or 5, providing means of visualizing the hierarchy as a tree structure.
